# FASCICULE DE BREVET EUROPEEN

(11) **EP 4 313 574 B1**
(45) Date de publication et mention de la délivrance du brevet: **23.04.2025**
(21) Numéro de dépôt: 22717228.5
(22) Date de dépôt: 24.03.2022
(51) Int. Cl.: B29D 99/00, B29C 70/46, F04D 29/02, F01D 5/28, B64C 11/26

(54) **AUBE COMPRENANT UNE STRUCTURE EN MATÉRIAU COMPOSITE ET PROCÉDÉ DE FABRICATION ASSOCIÉ**
SCHAUFEL MIT EINER STRUKTUR AUS VERBUNDMATERIAL UND ENTSPRECHENDES HERSTELLUNGSVERFAHREN
BLADE COMPRISING A COMPOSITE MATERIAL STRUCTURE AND METHOD OF MANUFACTURING THE SAME

(30) Priorité: 30.03.2021 FR 2103278
(43) Date de publication de la demande: 07.02.2024
(73) Titulaire: SAFRAN AIRCRAFT ENGINES, 75015 Paris (FR)
(72) Inventeur: JOUDON, Vincent, 77550 MOISSY-CRAMAYEL (FR); COTTET, Clément, 77550 MOISSY-CRAMAYEL (FR); COURTIER, Vivien Mickaël, 77550 MOISSY-CRAMAYEL (FR); SERVANT, Régis Eugène Henri, 77550 MOISSY-CRAMAYEL (FR)
(74) Mandataire: Regimbeau
(86) Numéro de dépôt international: PCT/FR2022/050549
(87) Numéro de publication internationale: WO 2022/208002

(56) Documents cités:
- FR-A1- 2 954 271
- FR-A1- 2 962 175
- US-A- 4 524 499

## Description

### DOMAINE DE L'INVENTION

L'invention concerne une aube comprenant une structure en matériau composite.

L'invention concerne plus particulièrement, mais non exclusivement, une aube destinée à être utilisée dans un rotor de soufflante non-carénée de moteur d'aéronef (tels qu'un moteur de type « Open Rotor », c'est-à-dire dont la soufflante n'est pas carénée, présentant deux hélices tournantes ou un moteur de type USF pour « Unducted Single Fan » présentant un aubage mobile et un aubage fixe ou un turbopropulseur présentant une architecture avec une seule hélice) ou dans un rotor d'éolienne.

### ETAT DE LA TECHNIQUE

La conception des aubes de soufflante nécessite de prendre en compte des contraintes antagonistes.

D'un côté, le dimensionnement de ces aubes doit permettre des performances aérodynamiques optimales (maximiser le rendement et fournir la poussée tout en minimisant les pertes). L'amélioration des performances aérodynamiques de la soufflante tendant vers une augmentation du taux de dilution (BPR, acronyme anglais de bypass ratio), cela se traduit par une augmentation du diamètre externe, et donc de l'envergure de ces aubes.

D'un autre côté, il est également nécessaire de garantir une résistance aux contraintes mécaniques pouvant s'exercer sur ces aubes tout en limitant leur signature acoustique.

L'intérêt des moteurs à soufflante non-carénée est que le diamètre de la soufflante n'est pas limité par la présence d'un carénage, de sorte qu'il est possible de concevoir un moteur présentant un fort taux de dilution, et par conséquent une consommation réduite de carburant.

Ainsi, dans ce type de moteur, les aubes de la soufflante peuvent présenter une grande envergure.

Il a été proposé de réaliser ces aubes en matériau métallique. Si les aubes en matériau métallique ont une bonne résistance mécanique, elles présentent toutefois l'inconvénient d'avoir une masse relativement importante.

Afin de réduire cette masse, il est souhaitable de pouvoir fabriquer ces aubes en matériau composite.

De plus, ces moteurs comprennent généralement un mécanisme permettant de modifier l'angle de calage des aubes afin d'adapter la poussée générée par la soufflante en fonction des différentes phases de vol.

Par ailleurs, sur les architectures à soufflante non-carénée, le démarrage du moteur est généralement effectué « en drapeau » avec un calage très ouvert. En effet, un calage très ouvert permet de consommer la puissance par le couple, ce qui assure la sécurité machine en garantissant des régimes de soufflante faibles.

Or, avec un calage très ouvert, les aubes subissent un écoulement aérodynamique turbulent, fortement décollé, qui génère une excitation vibratoire large bande. En particulier sur des aubes à large corde et de grande envergure, l'effort de flexion est intense, bien que le régime moteur ne soit pas élevé.

Toutefois, les efforts aérodynamiques intenses auxquelles ces aubes sont soumises risquent d'endommager les aubes au niveau de leur échasse (qui relie le pied à la pale) et/ou le moyeu dans la zone d'interface entre ces aubes et le moyeu du rotor de la soufflante.

Dans les architectures non carénées, une excitation vibratoire intense peut survenir par ailleurs à des régimes de rotation beaucoup plus élevés en raison des effets d'installation du moteur sur l'avion et de la direction de l'écoulement infini amont. En effet, un moteur non caréné subit l'influence du sol et du fuselage ce qui provoque une distorsion dans l'alimentation de l'hélice, en vitesse d'écoulement, selon les azimuts moteur. Cela entraîne une réponse vibratoire des aubes, notamment sur les premiers ordres moteurs 1N, 2N et 3N. D'autre part, en l'absence de manche d'entrée d'air, la direction de l'air qui s'écoule à travers les aubes n'est pas parallèle à l'axe moteur et forme un angle de dérapage avec celui-ci. Cet angle de dérapage entraine des efforts dits « 1P » qui provoquent une réponse vibratoire des aubes sur l'ordre moteur 1N. De façon similaire, ces efforts 1P peuvent également apparaître lors des phases de montées ou d'approche de l'aéronef car l'air s'écoule à travers les pales avec un angle d'incidence.

Le document FR2962175 décrit une aube de turbomachine comprenant une structure à profil aérodynamique et un longeron disposé à l'intérieur de la structure. Le document US4524499 décrit une hélice comportant des pales en matériau composite, chacune comprenant un noyau allongé en mousse rigide expansée s'étendant à partir d'un élément de base métallique.

### EXPOSE DE L'INVENTION

Un but de l'invention est de proposer une aube comprenant un matériau composite adaptée pour être utilisée avec un mécanisme de calage variable et dans un environnement du type « Open Rotor » tout en étant capable de résister à des efforts aérodynamiques intenses, sous la contrainte d'un encombrement limité et d'une masse minimale.

Un autre but de l'invention est de proposer une aube comprenant un matériau composite adaptée pour être utilisée avec un mécanisme de calage variable et dans un environnement du type « Open Rotor » qui soit capable de retenir la pale en cas de rupture d'une partie de l"aube, notamment dans la zone de l'échasse qui est très contrainte.

Un autre but encore de l'invention est de proposer une aube comprenant un matériau composite adaptée pour être utilisée avec un mécanisme de calage variable et dans un environnement du type « Open Rotor » qui puisse être réalisée de manière simple et rapide, sans nécessiter un grand nombre d'opérations.

Il est à cet effet proposé, selon un premier aspect de l'invention une aube d'une turbomachine comprenant :
- une structure à profil aérodynamique comprenant deux peaux en vis-à-vis, les peaux comprenant un renfort fibreux densifié par une matrice ;
- un longeron comprenant une partie de pied d'aube configurée pour être montée sur un moyeu d'un rotor de la turbomachine, une partie de pale disposée à l'intérieur de la structure à profil aérodynamique entre les deux peaux, et une partie d'échasse s'étendant à l'extérieur de la structure à profil aérodynamique entre la partie de pied d'aube et la partie de pale,
   la partie de pale comprenant un corps raccordé à la partie de pied d'aube et deux branches s'étendant radialement depuis le corps ; et
- un renfort structural s'étendant de la partie de pied d'aube jusqu'au corps de la partie de pale, le renfort structural étant solidaire de la partie de pied d'aube et configuré pour former un chemin d'effort distinct de la partie d'échasse en cas de rupture du longeron au sein de la partie d'échasse.

Certaines caractéristiques préférées mais non limitatives de l'aube selon le premier aspect sont les suivantes, prises individuellement ou en combinaison :
- le renfort structural comprend une contreplaque fixée sur la partie de pale de sorte à venir en contact avec le corps, à l'opposé de la partie de pied d'aube ;
- le renfort structural comprend au moins une tige montée serrée entre la partie de pied d'aube et la contreplaque, de préférence deux tiges parallèles ;
- l'au moins une tige est insérée dans une lumière traversante débouchant sur une face radialement interne de la partie de pied d'aube ;
- l'au moins une tige est rectiligne ;
- le renfort structural comprend un fût monolithique avec la partie de pied d'aube et s'étendant à travers un passage formé dans la partie d'échasse et le cas échéant le corps de la partie de pale ;
- la contreplaque est raccordée à une extrémité du fût ;
- le passage est évasé dans la partie d'échasse du longeron de sorte à ménager un espace annulaire autour du fût dans la partie d'échasse ;
- le longeron est métallique ; et/ou
- l'aube comprend en outre une pièce de remplissage comportant des cavités internes, logée dans la structure à profil aérodynamique entre les deux branches de la partie de pale.

Selon un deuxième aspect, l'invention propose une soufflante comprenant un moyeu et des aubes selon le premier aspect s'étendant radialement à partir du moyeu, chaque aube étant montée rotative par rapport au moyeu autour d'un axe de calage respectif.

Selon un troisième aspect, l'invention propose un moteur comprenant une soufflante selon le deuxième aspect et un mécanisme d'actionnement propre à être commandé pour faire tourner les aubes autour d'axes de calage de manière à modifier un angle de calage des aubes.

Selon un quatrième aspect, l'invention propose un aéronef comprenant un moteur à turbine à gaz selon le troisième aspect.

Selon un cinquième aspect, l'invention propose un procédé de fabrication d'une aube selon le premier aspect comprenant les étapes suivantes :
S1 : réalisation du longeron et du renfort structural ;
S3 : réalisation du renfort fibreux de la structure à profil aérodynamique, par exemple par tissage tridimensionnel ;
S4 : insertion du longeron dans le renfort fibreux de sorte que la partie de pied d'aube se trouve à l'extérieur du premier renfort fibreux et que la partie de pale se trouve à l'intérieur du premier renfort fibreux ; et
S6 : placement l'ensemble formé par le premier renfort fibreux et le deuxième renfort fibreux dans un moule et injection d'une matrice dans l'ensemble de sorte à obtenir l'aube.

Optionnellement, préalablement à l'étape S4, le procédé comprend en outre une étape de positionnement d'une pièce de remplissage réalisée dans un matériau comportant des cavités internes entre les branches de la partie de pale du longeron.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 représente de manière schématique un exemple de moteur incluant une soufflante non-carénée.
La figure 2 représente de manière schématique une aube de soufflante et un mécanisme d'actionnement permettant de modifier l'angle de calage des aubes de la soufflante, dans laquelle l'aube de soufflante a été représentée en coupe partielle afin de faire apparaître le longeron, une pièce de remplissage et le renfort structural.

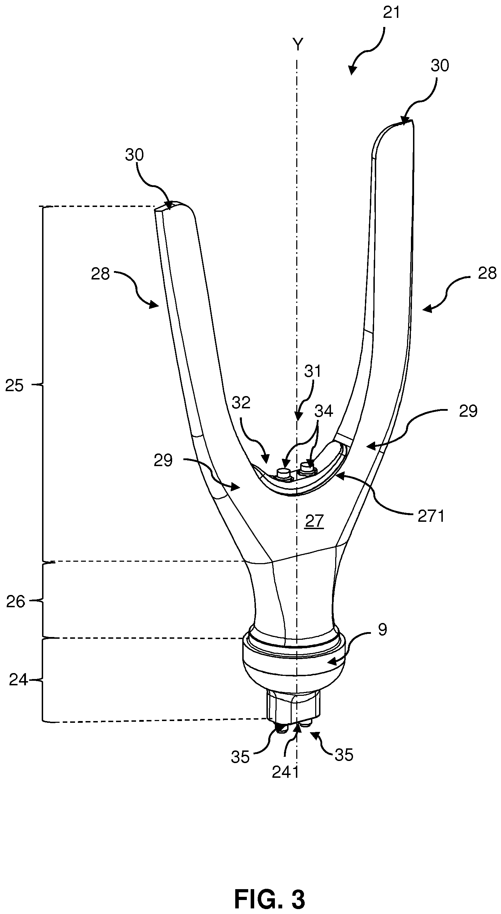

La figure 3 est une vue isométrique d'un premier exemple de réalisation d'un longeron d'une aube conforme à l'invention.
La figure 4 est une vue de côté du longeron de la figure 3.

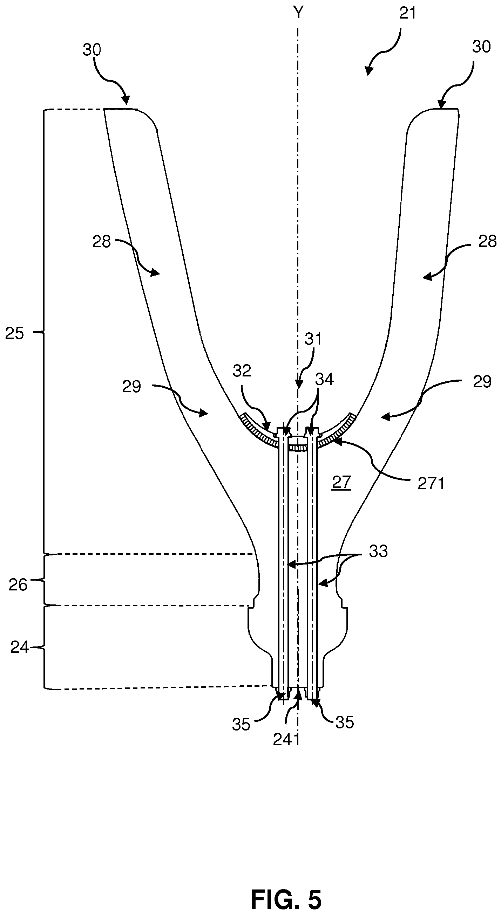

La figure 5 est une vue en coupe du longeron de la figure 3, selon un plan passant par l'axe de calage Y et les branches du longeron.
La figure 6 est une vue en coupe d'un deuxième exemple de réalisation d'un longeron d'une aube conforme à l'invention.

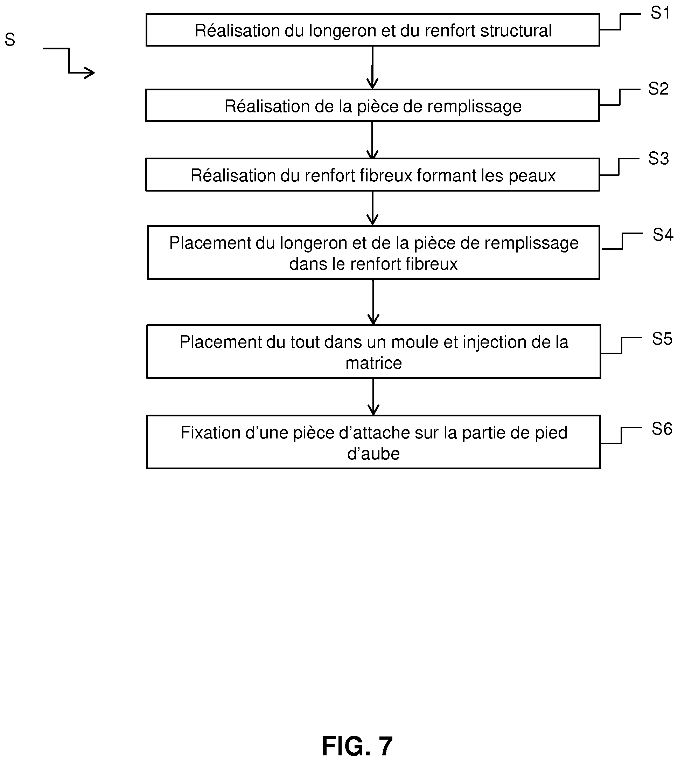

La figure 7 est un organigramme illustrant les étapes d'un procédé de fabrication d'une aube conforme à un mode de réalisation.
La figure 8 illustre un exemple d'aéronef comprenant des moteurs conformes à un mode de réalisation de l'invention.

Sur l'ensemble des figures, les éléments similaires portent des références identiques.

### DESCRIPTION DETAILLEE DE L'INVENTION

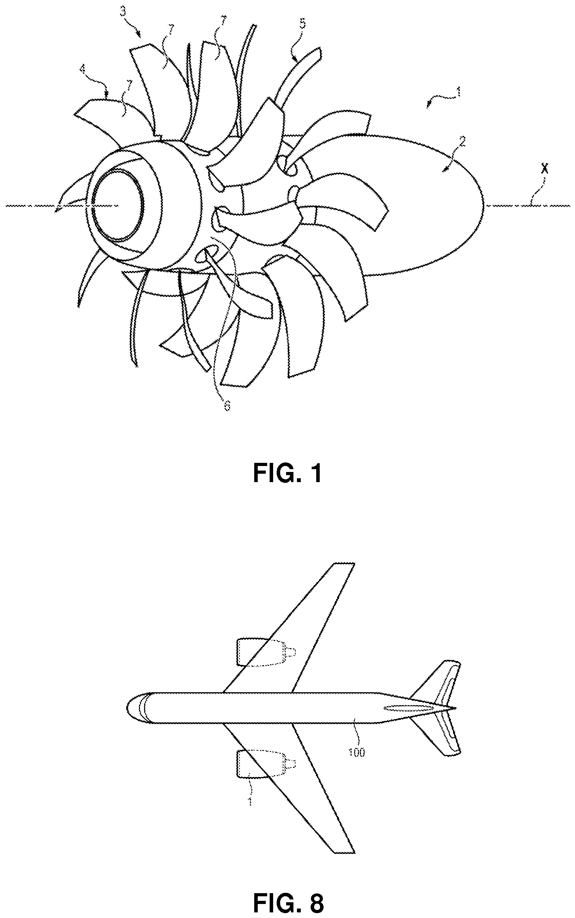

Sur la figure 1, le moteur 1 représenté est un moteur de type « Open Rotor », en configuration couramment qualifiée de « pusher » (i.e. la soufflante non-carénée est placée à l'arrière du générateur de puissance avec une entrée d'air située sur le côté, à droite sur la figure 1).

Le moteur 1 comprend une nacelle 2 destinée à être fixée à un fuselage d'un aéronef 100 et une soufflante 3 (ou hélice) non-carénée. La soufflante 3 comprend deux rotors de soufflante contrarotatifs 4 et 5. Autrement dit, lorsque le moteur 1 est en fonctionnement, les rotors 4 et 5 sont entrainés en rotation par rapport à la nacelle 2 autour d'un même axe de rotation X (qui coïncide avec un axe principal du moteur), en sens opposés.

Dans l'exemple illustré sur la figure 1, le moteur 1 est un moteur de type « Open Rotor » en configuration « pusher » à rotors de soufflante contrarotatifs. Cependant, l'invention n'est pas limitée à cette configuration. L'invention s'applique également à des moteurs de type « Open Rotor » en configuration « puller » (i.e. la soufflante est placée en amont du générateur de puissance avec une entrée d'air située avant, entre ou juste derrière les deux rotors de soufflante).

En outre, l'invention s'applique également à des moteurs présentant des architectures différentes, telles qu'une architecture comprenant un rotor de soufflante comprenant des aubes mobiles et un stator de soufflante comprenant des aubes fixes, ou bien un unique rotor de soufflante.

L'invention est applicable à des architectures de type turbopropulseur (comprenant un unique rotor de soufflante), ainsi qu'à des rotors d'éolienne.

Dans la présente demande, on appelle axe X, l'axe de rotation du rotor de la soufflante 4, 5 (ou de l'hélice). La direction axiale correspond à la direction de l'axe X et une direction radiale est une direction perpendiculaire à cet axe X et passant par lui. Chaque aube 7 est montée rotative par rapport au moyeu 6 autour d'un axe de calage Y respectif : cet axe de calage Y s'étend suivant une direction globalement radiale par rapport à l'axe X. Enfin, interne (respectivement, intérieur) et externe (respectivement, extérieur), respectivement, sont utilisés en référence à une direction radiale de sorte que la partie ou la face interne d'un élément est plus proche de l'axe X que la partie ou la face externe du même élément.

L'aube 7 sera ainsi définie par rapport à l'axe X du rotor sur lequel elle est destinée à être montée et son axe Y de calage. Par « corde » on comprendra ici, pour une section donnée de l'aube 7 (et donc pour un point donné de l'axe de calage Y), le segment de droite sensiblement axial qui connecte le bord d'attaque au bord de fuite de l'aube 7.

Sur la figure 1, chaque rotor de soufflante 4, 5 comprend un moyeu 6 (ou moyeu d'aubage) monté rotatif par rapport à la nacelle 2 et une pluralité d'aubes 7 fixées au moyeu 6. Les aubes 7 s'étendent sensiblement radialement par rapport à l'axe de rotation X du rotor.

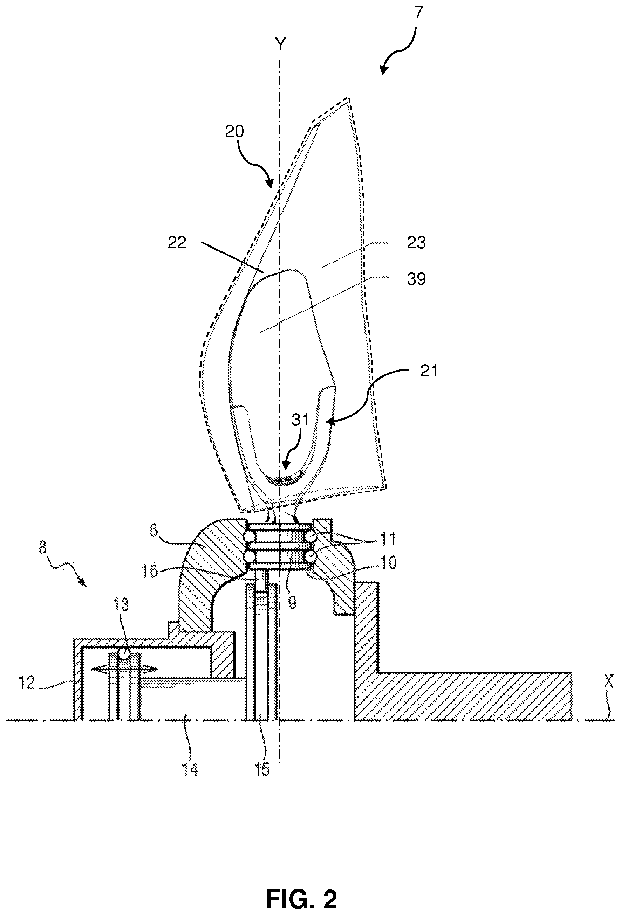

Comme illustré sur la figure 2, la soufflante 3 comprend en outre un mécanisme d'actionnement 8 permettant de modifier collectivement l'angle de calage des aubes 7 des rotors, afin d'adapter les performances du moteur aux différentes phases de vol. A cet effet, chaque aube 7 comprend une pièce d'attache 9 (ou moyeu d'aube) disposée en pied d'aube. La pièce d'attache 9 est montée rotative par rapport au moyeu 6 autour d'un axe de calage Y. Plus précisément, la pièce d'attache 9 est montée rotative à l'intérieur d'un logement 10 ménagé dans le moyeu 6, par l'intermédiaires de billes 11 ou d'autres éléments roulants.

La pièce d'attache 9 comprend une paroi présentant une surface externe ayant une forme de révolution. La surface externe présente deux gorges circulaires propres à former des chemins de roulement pour des billes ou d'autres éléments roulants.

En variante, chaque aube 7 peut comprendre un pied d'aube cylindrique configuré pour être connecté directement au moyeu 6 par l'intermédiaire de paliers.

Le mécanisme d'actionnement 8 comprend par exemple un actionneur 12 comprenant un corps 13 fixé au moyeu 6 et une tige 14 propre à être entrainée en translation par rapport au corps 12. Le mécanisme d'actionnement 8 comprend en outre une glissière annulaire 15 montée solidaire de la tige 14 et un pion 16 monté solidaire de la pièce d'attache 9. Le pion 16 est propre à coulisser dans la glissière 15 et à tourner par rapport à la glissière 15, de manière à convertir un mouvement de translation de la tige 14 est un mouvement de rotation de la pièce d'attache 9, et par conséquent un mouvement de rotation de l'aube 7 par rapport au moyeu 6 autour de son axe de calage Y.

L'aube 7 comprend une structure à profil aérodynamique 20 propre à être placée dans un flux d'air lorsque le moteur 1 est en fonctionnement afin de générer une portance, ainsi qu'un longeron 21.

La structure à profil aérodynamique 20 comprend deux peaux 22, qui sont raccordées l'une à l'autre et s'étendent globalement l'une en face de l'autre. Les peaux 22 sont conformées de sorte à définir ensemble un intrados, un extrados, un bord d'attaque et un bord de fuite de l'aube 7. De manière connue en soi, le bord d'attaque est configuré pour s'étendre en regard de l'écoulement des gaz entrant dans le moteur 1. Il correspond à la partie antérieure d'un profil aérodynamique qui fait face au flux d'air et qui divise l'écoulement d'air en un écoulement d'intrados et en un écoulement extrados. Le bord de fuite quant à lui correspond à la partie postérieure du profil aérodynamique, où se rejoignent les écoulements intrados et extrados.

Les peaux 22 de la structure à profil aérodynamique 20 sont réalisées dans un matériau composite comprenant un renfort fibreux 23 (voir notamment figure 2) densifié par une matrice. Elles sont donc monolithiques et sont réalisées d'une seule pièce selon un mode de réalisation non limitatif. En variante non représentée, il est possible de considérer un renfort fibreux pour l'intrados et un autre pour l'extrados.

Le renfort fibreux 23 peut être formé à partir d'une préforme fibreuse en une seule pièce avec épaisseur évolutive. Les fibres du renfort fibreux 23 comprennent au moins l'un des matériaux suivants : carbone, verre, aramide, polypropylène et/ou céramique. Le renfort fibreux 23 peut comprendre des arrangements fibreux tissés (bidimensionnels ou tridimensionnels), tressés, tricotés ou stratifiés. La matrice comprend typiquement une matière organique (thermodurcissable, thermoplastique ou élastomère) ou une matrice en carbone. Par exemple, la matrice comprend une matière plastique, typiquement un polymère, par exemple époxyde, bismaléimide ou polyimide.

Le longeron 21 comprend une partie de pied d'aube 24 qui s'étend à l'extérieur de la structure à profil aérodynamique 20, une partie de pale 25 qui est disposée à l'intérieur de la structure à profil aérodynamique 20, entre les deux peaux 22 et une partie d'échasse 26 qui s'étend entre la partie de pied d'aube 24 et la partie de pale 25. La partie de pied d'aube 24 est configurée pour être insérées dans le moyeu 6, le cas échéant par l'intermédiaire d'une pièce d'attache 9. La partie d'échasse 26 correspond à la zone du longeron 21 qui s'étend entre la sortie du moyeu 6 (au niveau des portées) et la structure aérodynamique 20. La partie de pale 25 forme, avec la structure à profil aérodynamique 20, la pale de l'aube 7.

Le longeron 21 peut être réalisé en métal et en une seule pièce : la partie de pied d'aube 24, la partie de pale 25 et la partie d'échasse 26 sont donc monolithiques. Le matériau métallique du longeron 21 peut comprendre l'un au moins des matériaux suivants : de l'acier, du titane, un alliage de titane (en particulier du TA6V, comprenant du titane, de l'aluminium, du vanadium et des traces de carbone, de fer, d'oxygène et d'azote), un superalliage à base de nickel tel que de l'Inconel, un alliage d'aluminium. La fabrication du longeron métallique 21 peut faire intervenir plusieurs procédés spécifiques comme par exemple l'usinage, la forge, le formage, la fonderie ou encore la fabrication additive (impression 3D).

En variante, le longeron 21 peut comprendre un matériau composite comprenant un renfort fibreux densifié par une matrice. De manière analogue à la structure à profil aérodynamique 20, la matrice du longeron 21 comprend typiquement une matière organique (thermodurcissable, thermoplastique ou élastomère) ou une matrice en carbone. Par exemple, la matrice comprend une matière plastique, typiquement un polymère, par exemple époxyde, bismaléimide ou polyimide. Les fibres du renfort fibreux du longeron comprennent au moins l'un des matériaux suivants : carbone, verre, aramide, polypropylène et/ou céramique. Le renfort fibreux 23 peut comprendre des arrangements fibreux tissés (bidimensionnels ou tridimensionnels), tressés, tricotés ou stratifiés. La matrice du longeron 21 et la matrice de la structure à profil aérodynamique peuvent le cas échéant être identiques. Les fibres du renfort fibreux du longeron 21 peuvent être réalisées dans un matériau identique ou différent des fibres du renfort fibreux 23.

Afin de résister à des efforts aérodynamiques intenses, la partie de pale 25 du longeron 21 comprend un corps 27 principal raccordé à la partie de pied d'aube 24 et deux branches 28 s'étendant radialement depuis le corps 27. Le corps 27 et les branches 28 de la partie de pale 25 forment ensemble l'âme de l'aube 7.

Les branches 28 s'étendent radialement depuis un sommet du corps 27 en s'éloignant progressivement de l'axe de calage Y. Les branches 28 divergent donc légèrement depuis leur extrémité radialement interne 29, qui est fixée sur le corps 27, en direction de leur extrémité libre 30. La distance entre les extrémités libres 30 des branches 28 est donc supérieure à la distance entre leurs extrémités radialement internes 29. Par exemple, la distance maximale entre les extrémités libres 30 des branches 28 peut être comprise entre 50 % et 80 % de la corde maximale de l'aube 7 tandis que la distance maximale entre les extrémités radiales internes 29 (mesurée au niveau de la contreplaque décrite ci-après) peut être comprise entre 20 % et 50 % de la corde maximale.

D'un point de vue mécanique, les deux branches 28 du longeron 21 permettent d'augmenter la raideur de la structure de l'aube 7 en torsion tout en conservant une masse réduite. Un autre avantage de cette géométrie de longeron 21, dont les branches 28 s'étendent radialement et dans la direction de la corde est de retenir les peaux 22 de la structure à profil aérodynamique 20 par restriction de section. En effet, sous l'effet des efforts centrifuges orientés dans la direction radiale, les peaux 22 sont plaquées sur les surfaces inclinées des branches 28. La rétention des peaux 22 n'est pas donc pas uniquement assurée par la tenue d'une interface « faible » telle qu'une interface de colle ou de résine qui assure la cohésion entre deux substrats.

Dans une forme de réalisation, une largeur (dimension suivant la corde de l'aube 7 pour une hauteur donnée) de chaque branche 28 est sensiblement constante, à 10 % près, entre leur extrémité radialement interne 29 et leur extrémité libre 30. Leur épaisseur (dimension suivant un axe normal à la corde pour une hauteur donnée) décroît de leur extrémité radialement interne 29 en direction de leur extrémité libre 30.

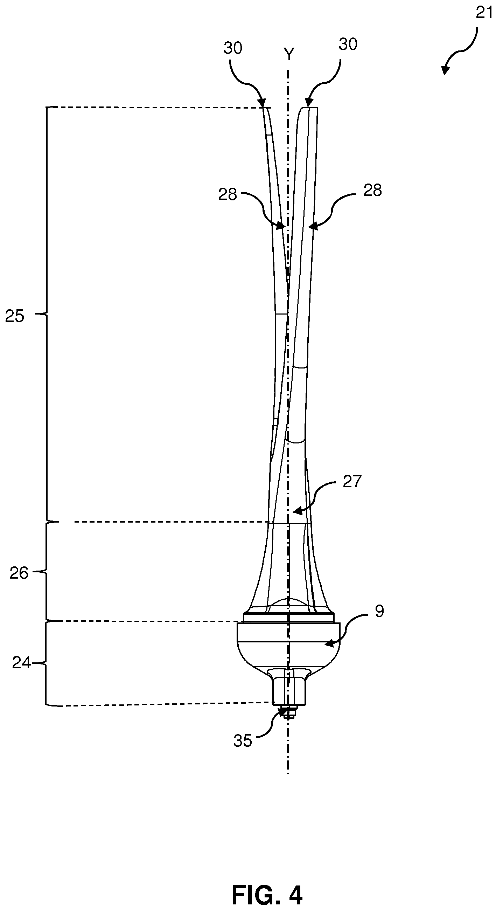

La géométrie des branches 28 est choisie de sorte à suivre la géométrie des peaux 22, et donc de l'aube 7. En d'autres termes, lorsque l'aube 7 est vrillée, les branches 28 peuvent également être vrillées de sorte à suivre la géométrie de l'aube 7 (voir par exemple figure 4). Les deux branches 28 ne s'étendent donc pas nécessairement dans un même plan et suivent de préférence la cambrure de l'aube 7.

Une hauteur (dimension suivant l'axe de calage Y) de la partie de pale 25 du longeron 21 peut être comprise entre 20 % et 75 % de la hauteur de la structure aérodynamique, par exemple de l'ordre de 35 %.

Optionnellement, le longeron 21 peut comprendre un plus grand nombre de branches 28. Les branches 28 supplémentaires s'étendent alors radialement depuis le corps 27.

Lorsque le longeron 21 comprend un matériau composite, la conformation du longeron 21 est adaptée au type de matériau utilisé. En particulier, les branches 28 peuvent être plus étendues suivant la direction de la corde de l'aube 7 que dans le cas d'un longeron 21 métallique. Par ailleurs, plusieurs renforts fibreux pourraient être utilisés pour réaliser le longeron 21, en évitant les usinages, et la section de travail du longeron 21 serait plus grande que dans le cas d'un longeron 21 métallique.

La partie de pied d'aube 24 peut présenter une forme de bulbe, c'est-à-dire une forme générale renflée ou bombée, ce renflement ou bombement s'étendant autour de l'axe de calage Y. Si l'on définit un plan médian passant par le bulbe qui est normal à l'axe de calage Y et qui passe par sa plus grande section transversale, le bulbe de la partie de pied d'aube 24 peut par exemple présenter une section globalement circulaire.

Le longeron 21 peut être creux. En variante, une partie seulement du longeron 21 peut être creuse (par exemple les branches 28), le reste du longeron 21 pouvant être plein (solide). Selon une autre variante encore, la totalité du longeron 21 est pleine (solide).

L'aube 7 comprend en outre un renfort structural 31 s'étendant de la partie de pied d'aube 24 jusqu'au corps 27 principal de la partie de pale 25. Ce renfort structural 31 est en particulier solidaire de la partie de pied d'aube 24 afin de former un chemin d'effort distinct de la partie d'échasse 26 du longeron 21 en cas de rupture du longeron 21 au sein de la partie d'échasse 26. Grâce à ce chemin d'effort distinct, le renfort structural 31 permet ainsi de retenir la pale de l'aube 7 en cas de rupture du longeron 21 dans sa partie d'échasse 26, qui est très contrainte. Le renfort structural 31 permet en particulier de réduire les risques encourus en cas de développement d'une ou de plusieurs criques/fissures par fatigue au sein de la partie d'échasse 26 ou lors d'une ingestion d'oiseau.

Le renfort structural 31 comprend une contreplaque 32 fixée sur la partie de pale 25 de sorte à venir en contact avec le corps 27, à l'opposé de la partie de pied d'aube 24. De préférence, la contreplaque 32 est globalement symétrique par rapport à l'axe de calage Y et est centrée sur l'axe de calage Y. A titre d'exemple, la contreplaque 32 est plaquée contre une face radialement externe 271 du corps 27, entre les extrémités radiales internes 29 des branches 28 de la partie de pale 25 du longeron 21.

Dans une première forme de réalisation, le renfort structural 31 comprend au moins une tige 34 montée serrée entre la partie de pied d'aube 24 et la contreplaque 32. De préférence, le renfort structural 31 comprend deux tiges 34 montées en parallèle dans le longeron 21.

Dans cette forme de réalisation, une lumière 33 configurée pour recevoir une tige 34 correspondante du renfort structural 31 est réalisée dans le longeron 21. Chaque lumière 33 s'étend globalement suivant l'axe de calage Y. Dans le cas où le renfort structural 31 comprend deux lumières 33, les lumières 33 s'étendent de manière symétrique de part et d'autre de l'axe de calage Y. Chaque lumière 33 s'étend par ailleurs de la partie de pied d'aube 24 jusqu'au cœur de la partie de pale 25 et débouche à la fois sur une face radialement interne 241 de la partie de pied d'aube 24 (qui correspond à la face qui vient contre un fond de l'attache 9 ou du moyeu 6) et sur la face radialement externe 271 du corps 27, en regard de la contreplaque 32. Les lumière 33 sont donc traversantes.

Les tiges 34 et les lumière 33 sont de préférence rectilignes afin de faciliter la fabrication et l'assemblage de l'aube 7. Les lumière 33 peuvent par exemple être réalisées par perçage du longeron 21, puisque celui-ci est métallique.

Les tiges 34 peuvent chacune comprendre une vis 34 qui peut être fixée sur la contreplaque 31 à l'aide un écrou 35.

Afin de former un chemin d'effort alternatif en cas de rupture de la partie d'échasse 26 du longeron 21, la contreplaque 32 comprend deux orifices traversants pour recevoir chacun une tige 34 et est appliquée contre la face radialement externe 271 du corps 27 de sorte à placer chaque orifice traversant face à la sortie d'une lumière 33 correspondante. Chaque vis 34 est alors insérée dans l'un des orifices traversants et dans la lumière 33 correspondante de sorte que la tête de chaque vis 34 vienne en appui contre la contreplaque 32. L'extrémité libre de chaque vis 34 fait alors saillie de la lumière 33 correspondante. Un écrou 35 est ensuite vissé sur l'extrémité libre de chaque vis 34 et est serré de sorte à précontraindre la contreplaque 32 en lui appliquant une pression en direction du corps 27 (sans l'écraser pour autant). Ainsi, en cas de rupture de la partie d'échasse 26, les efforts transitant dans les tiges 34 (qui s'étendent radialement par rapport au rotor) augmentent considérablement sous l'effet des efforts centrifuges, ce qui a pour effet d'écraser la contreplaque 32 contre le corps 27 et donc de déplacer légèrement la pale radialement vers l'intérieur. La pale est ainsi retenue tout en générant un balourd (mécanique et/ou aérodynamique) qui est détectable par un système de surveillance du comportement moteur.

Bien entendu, les vis 34 et écrous 35 pourraient être montés dans l'autre sens, la tête des vis 34 étant alors en contact avec la face radialement interne 241 de la partie de pied d'aube 24 tandis que leur extrémité libre est fixée sur la contreplaque 32 par les écrous 35.

Dans cette forme de réalisation, la contreplaque 32 peut comprendre un matériau compressible. La contreplaque 32 peut être réalisée dans un élastomère. En variante, la contreplaque 32 peut comprendre un nid d'abeilles organique, tel qu'un nid d'abeille du type Nomex^{®} (comprenant des fibres aramides calandrées en feuilles et recouvertes de résine phénolique), ou un nid d'abeilles comprenant l'un des matériaux suivants : poly(p-phénylènetéréphtalamide) (type Kevlar), fibres de verre, aluminium. Selon une autre variante encore, la contreplaque 32 est en métal, par exemple dans le même matériau que le longeron 21.

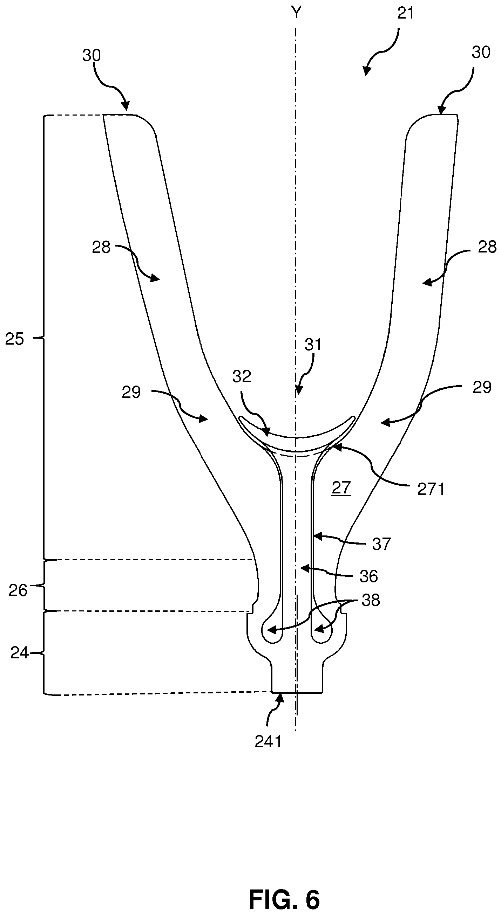

Dans une deuxième forme de réalisation illustrée à titre d'exemple sur la figure 6, le renfort structural 31 est monolithique avec le longeron 21. A cet effet, le renfort structural 31 comprend un fût 36 monolithique avec la partie de pied d'aube 24 et s'étendant suivant l'axe de calage Y à travers un passage 37 formé dans la partie d'échasse 26 et, optionnellement, dans le corps 27 de la partie de pale 25. De préférence, le fût 36 s'étend également à travers le corps 27.

Le fût 36 forme ainsi une portion de la partie d'échasse 26 et de la partie de corps 27. Il est monolithique avec la partie de pied d'aube 24. En revanche, il est séparé et distinct du reste de la partie d'échasse 26 et de la partie de pale 25 du longeron 21. Le fût 36 fait par ailleurs saillie de la face radialement externe 271 du corps 27, la contreplaque 32 étant raccordée une extrémité libre du fût 36.

Le fût 36 et la contreplaque 32 peuvent être monolithiques. En variante, la contreplaque 32 peut être rapportée et fixée sur le fût 36, par exemple par soudage ou à l'aide d'organes de fixation tels que des vis 34.

Dans la mesure où cette forme de réalisation ne nécessite pas l'application d'une précontrainte sur la contreplaque 32, celle-ci peut être réalisée dans le même matériau que le longeron 21 (et le fût 36).

Le longeron 21 monolithique avec le fût 36 et le cas échéant la contreplaque 32 peuvent notamment être obtenus par impression 3D. Le cas échéant, une couche en matériau compressible peut être fixée sur la face radialement interne de la contreplaque 32 et/ou la face radialement externe 271 du corps 27 afin d'amortir l'impact de la contreplaque 32 contre le corps 27 du longeron 21 au moment de l'activation du chemin d'effort secondaire (c'est-à-dire en cas de rupture de la partie d'échasse 26). La couche en matériau compressible peut, le cas échéant, être également réalisée en impression 3D et être monolithique avec la contreplaque 32 et/ou le corps 27. Par exemple, la couche en matériau compressible peut comprendre une mousse d'origine organique (polyethacrylimide, polytéréphtalate d'éthylène (PET), polychlorure de vinyle (PVC), polyétherimide (PEI), polyvinyl, carbone, polyisocyanurate, polyuréthane, etc.) ou métallique (notamment en alliage d'aluminium), ou encore un nid d'abeilles du type Nomex^{®}, en kevlar, en fibres de verre ou encore en aluminium.

Optionnellement, le passage 37 peut être évasé dans la partie d'échasse 26 du longeron 21 de sorte à ménager un espace 38 autour du fût 36. L'espace 38 peut notamment présenter une forme annulaire de section globalement circulaire à proximité de la partie de pied d'aube 24, la section (dans un plan normal à l'axe de calage Y) de l'espace 38 étant ensuite décroissante en direction du corps 27. L'espace 38 peut être vide ou, en variante, être en tout ou partie comblé par une pièce de remplissage pouvant comprendre des cavités internes.

Une section (dans un plan normal à l'axe de calage Y) du fût 36 est sensiblement constante dans la partie d'échasse 26 et dans le corps 27, puis s'évase progressivement à proximité de la contreplaque 32.

On notera que, quelle que soit la forme de réalisation du renfort structural 31, la forme de la partie de pied d'aube 24 du longeron 21 est inchangée. En d'autres termes, le passage 37 peut n'être formé que dans la partie d'échasse 26 et dans la partie de corps 27 du longeron 21. Par ailleurs, la forme extérieure de la partie d'échasse 26 et de la partie de pale 25 du longeron 21 peuvent être identiques quelle que soit la forme de réalisation du renfort structural 31. En revanche, dans le cas où le renfort structural 31 est monolithique avec la partie de pied d'aube 24, le corps 27 de la partie de pale 25 est en trois parties (voir notamment figure 6). Une première partie du corps 27 est formée par le fût 36 du renfort structural 31. Les deuxième et troisièmes parties correspondent au reste du corps 27 et s'étendent autour du fût 36. Ces deuxièmes parties s'étendent alors chacune dans le prolongement d'une branche 28 associée : elles peuvent donc être séparées tout le long du fût 36 et n'être reliées ensemble qu'au niveau de la partie de pied du longeron 21 (voir figure 6).

Optionnellement, l'aube 7 comprend en outre une pièce de remplissage 39 placée entre les deux peaux 22 de la structure à profil aérodynamique 20, entre les deux branches 28 et la face radialement externe 271 du corps 27 de la partie de pale 25 du longeron 21. La pièce de remplissage 39 sert d'appui pour les peaux 22 de la structure à profil aérodynamique 20.

La pièce de remplissage 39 peut être réalisée dans un matériau comportant des cavités internes, tel qu'une mousse d'origine organique (polyethacrylimide, polytéréphtalate d'éthylène (PET), polychlorure de vinyle (PVC), polyétherimide (PEl), polyvinyl, carbone, polyisocyanurate, polyuréthane, etc.) ou métallique (notamment en alliage d'aluminium), ou encore un nid d'abeilles du type Nomex^{®}, en kevlar, en fibres de verre ou encore en aluminium.

### Exemple de procédé de fabrication

Une aube 7 selon l'invention peut être obtenue conformément aux étapes suivantes.

Au cours d'une étape S1, le longeron 21 et le renfort structural 31 sont fabriqués.

Toute méthode conventionnelle peut être utilisée ici, dont l'usinage, la forge, le formage, la fonderie ou encore la fabrication additive (impression 3D) pour la réalisation du longeron 21.

Lorsque le renfort structural 31 comprend des tiges 34, la ou les lumière 33 sont réalisées dans le longeron 21, par exemple par usinage. La contreplaque 32, préalablement usinée, est appliquée sur la face radialement externe 271 du corps 27, puis une tige 34, typiquement une vis 34, est insérée dans chaque orifice et chaque lumière 33 associée. Un écrou 35 est alors vissé sur l'extrémité libre de chaque tige 34 de sorte à bloquer la ou les tiges 34 et la contreplaque 32 par rapport au longeron 21 et à précontraindre la contreplaque 32.

En variante, lorsque le longeron 21 est obtenu par impression 3D, le renfort structural 31 peut être réalisé simultanément à la fabrication du longeron 21. Le renfort structural 31 et le longeron 21 sont alors obtenus par impression 3D et sont monolithiques.

Lorsque le longeron 21 comprend un matériau composite, le renfort fibreux peut être réalisé par tissage tridimensionnel sur un métier à tisser de type jacquard. Lors du tissage, des faisceaux de torons de chaine (ou torons de chaine) sont disposés en plusieurs couches. Des torons de trame T sont entrelacés avec les torons de chaine C de manière à lier les différentes couches de torons de chaines C entre elles. Le tissage tridimensionnel peut être un tissage à armure « interlock ». Par « interlock », on désigne une armure de tissage dans laquelle chaque couche de torons de trame lie plusieurs couches de torons de chaine avec tous les torons d'une même colonne de trame ayant le même mouvement dans le plan de l'armure. Les branches 28 peuvent par exemple être obtenues en réalisant une déliaison au niveau de la face radialement externe 271 du corps 27.

D'autres types de tissages tridimensionnels connus peuvent être utilisés, comme notamment ceux décrits dans le document WO 2006/136755.

Au cours d'une étape S2, une pièce de remplissage 39 est réalisée et placée entre les deux branches 28 du longeron 21 et placée en appui contre la partie de pale 25 du longeron 21. Le cas échéant, un film de colle peut être appliqué à l'interface entre la pièce de remplissage 39 et le longeron 21.

La pièce de remplissage 39 peut être réalisée par injection d'une mousse entre les branches 28 du longeron 21 ou en rapportant et fixant une pièce de remplissage 39 préalablement usinée.

En variante, lorsque le longeron 21 est obtenu par impression 3D, la pièce de remplissage 39 peut être obtenue simultanément à l'étape S1 par impression 3D (en particulier lorsqu'elle est métallique). Dans cette variante, la pièce de remplissage 39, le renfort structural 31 et le longeron 21 peuvent alors être monolithiques.

Au cours d'une étape S3, le renfort fibreux 23 de la structure à profil aérodynamique 20 est réalisé. Le renfort fibreux 23 peut être réalisé par tissage tridimensionnel sur un métier à tisser de type jacquard. Lors du tissage, des faisceaux de torons de chaine (ou torons de chaine) sont disposés en plusieurs couches. Des torons de trame T sont entrelacés avec les torons de chaine C de manière à lier les différentes couches de torons de chaines C entre elles. Le tissage tridimensionnel peut être un tissage à armure « interlock ». Par « interlock », on désigne une armure de tissage dans laquelle chaque couche de torons de trame lie plusieurs couches de torons de chaine avec tous les torons d'une même colonne de trame ayant le même mouvement dans le plan de l'armure.

D'autres types de tissages tridimensionnels connus peuvent être utilisés, comme notamment ceux décrits dans le document WO 2006/136755.

Afin de permettre l'insertion (étape S4) du longeron 21 dans la structure à profil aérodynamique 20, une déliaison est réalisée dans le renfort fibreux 23. La déliaison peut être réalisée en tête (à l'opposé du pied d'aube 7), au niveau du bord d'attaque ou du bord de fuite de l'aube 7. La zone déliée est obtenue en ne reliant pas les torons de chaîne de deux couches successives en deux endroits distincts et séparés par les torons de trame.

Le renfort fibreux 23 est ensuite mis en forme (déformation en trois dimensions afin de lui conférer une forme vrillée correspondant à sa forme finale).

En variante, le renfort fibreux 23 de la structure à profil aérodynamique 20 peut comprendre un arrangement fibreux tissé en deux dimensions, tressé, tricoté ou stratifié. En particulier, le renfort fibreux 23 des peaux 22 de la structure à profil aérodynamique 20 peut comprendre un matériau composite stratifié préimprégné. Dans cette variante de réalisation, il n'est alors pas nécessaire de réaliser une déliaison.

Au cours d'une étape S4, le renfort fibreux 23 de la structure à profil aérodynamique 20 est placé autour du longeron 21 et de la pièce de remplissage 39 de sorte que la partie de pied d'aube 24 et la partie d'échasse 26 se trouvent à l'extérieur du renfort fibreux 23 et que la partie de pale 25 se trouve à l'intérieur du renfort fibreux 23.

Lorsque le renfort fibreux 12 est réalisé par réalisé par tissage tridimensionnel, le longeron 21 et la pièce de remplissage 39 sont avantageusement insérées par la déliaison du renfort fibreux, typiquement par le haut lorsque la déliaison est réalisée en tête d'aube 7.

Lorsque le renfort fibreux 23 est stratifié, les feuilles de matériau composite préimprégné peuvent être stratifiées sur le longeron 21 et la pièce de remplissage 39.

Au cours d'une étape S5, l'ensemble ainsi obtenu, formé du longeron 21, du renfort fibreux 23 de la structure à profil aérodynamique 20 et de la pièce de remplissage 39 est placé dans un moule présentant une cavité ayant la forme de la pièce finale moulée (à savoir l'aube 7) et de la matière plastique (la « matrice » de la structure à profil aérodynamique) est injectée dans le moule de manière à imprégner le renfort fibreux 23. L'injection de matière plastique peut être réalisée par une technique d'injection du type RTM ou VARRTM. La matière plastique injectée est par exemple une composition liquide thermodurcissable contenant un précurseur organique du matériau de la matrice. Le précurseur organique se présente habituellement sous forme d'un polymère, tel qu'une résine, éventuellement dilué dans un solvant.

De manière connue en soi, la matière plastique est chauffée de manière à provoquer une polymérisation de la matière plastique, par exemple par réticulation. A cet effet, le moule est placé dans une étuve. La pièce obtenue est ensuite démoulée puis, optionnellement, détourée par usinage afin de supprimer les sur-longueur et d'obtenir une pièce présentant la forme désirée, malgré une éventuelle rétractation des fibres du renfort fibreux 23 pendant la polymérisation de la matière plastique.

Au cours d'une étape S6, une pièce d'attache 9 peut le cas échéant être rapportée et fixée sur le pied de l'aube 7, autour de la partie de pied d'aube 24 du longeron 21. Elle peut notamment être obtenue par usinage afin de former la cavité dont la forme et les dimensions correspondent à celles de la partie de pied d'aube 24. Optionnellement, la pièce d'attache 9 peut être réalisée en deux parties afin de pouvoir être rapportée et fixée autour de la partie de pied d'aube 24 grâce à deux bagues dédiées, par exemple par frettage, vissage, soudage ou encore à l'aide d'un collier de serrage. L'étape S6 de fixation de la pièce d'attache 9 peut donc être réalisée avant ou après l'injection (étape S5). Avantageusement, le matériau constitutif de la pièce d'attache 9 peut être différent de celui du longeron 21.

Des opérations conventionnelles de fin de gamme de l'aube 7 telles que des reprises par usinage, le collage de bandes anti-frottement, l'insertion d'un système de dégivrage ou encore l'ajout d'un bouclier métallique de bord d'attaque et/ou de bord de fuite peuvent ensuite être mises en œuvre.

L'invention permet ainsi à l'aube 7 de résister aux chargements mécaniques rencontrés lors des phases de vol qui sont susceptibles d'exciter les modes vibratoires de l'aube 7. La réalisation du longeron 21 métallique permet en outre d'obtenir une finesse de profil aérodynamique en bas de pale, permettant d'alimenter correctement le compresseur basse pression en aval de la soufflante avec une manche d'entrée d'air annulaire conventionnelle et d'éviter l'utilisation d'une manche sectorielle déportée. De plus, la rétention des peaux 22 de la structure à profil aérodynamique est assurée non seulement par la matrice injectée dans le renfort fibreux après insertion du longeron 21, mais également par restriction de section autour du longeron 21 métallique. D'un point de vue mécanique, l'utilisation d'un tel longeron 21 métallique est également avantageuse en termes de raideur en torsion par rapport à sa masse limitée. D'un point de vue industriel, les opérations de fabrication, de contrôle et d'assemblage sont considérablement réduites en comparaison avec l'utilisation d'un longeron 21 en matériaux composites. Enfin, le renfort structural 31 permet de se prémunir des conséquences d'une rupture de l'échasse de l'aube 7 et d'alerter le pilote de la défaillance.

## Revendications

1. Aube (7) d'une turbomachine comprenant :
- une structure à profil aérodynamique (20) comprenant deux peaux (22) en vis-à-vis, les peaux (22) comprenant un renfort fibreux (23) densifié par une matrice ; et
- un longeron (21) comprenant une partie de pied d'aube (24) configurée pour être montée sur un moyeu d'un rotor de la turbomachine, une partie de pale (25) disposée à l'intérieur de la structure à profil aérodynamique (20) entre les deux peaux (22), et une partie d'échasse (26) s'étendant à l'extérieur de la structure à profil aérodynamique (20) entre la partie de pied d'aube (24) et la partie de pale (25),
la partie de pale (25) comprenant un corps (27) raccordé à la partie de pied d'aube (24) et deux branches s'étendant radialement depuis le corps (27) ;
l'aube (7) étant **caractérisée en ce qu'**elle comprend en outre un renfort structural (31) s'étendant de la partie de pied d'aube (24) jusqu'au corps (27) de la partie de pale (25), le renfort structural (31) étant solidaire de la partie de pied d'aube (24) et configuré pour former un chemin d'effort distinct de la partie d'échasse (26) en cas de rupture du longeron (21) au sein de la partie d'échasse (26).

2. Aube (7) selon la revendication 1, dans laquelle le renfort structural (31) comprend une contreplaque (32) fixée sur la partie de pale (25) de sorte à venir en contact avec le corps (27), à l'opposé de la partie de pied d'aube (24).

3. Aube (7) selon la revendication 2, dans laquelle le renfort structural (31) comprend au moins une tige (34) montée serrée entre la partie de pied d'aube (24) et la contreplaque (32), de préférence deux tiges (34) parallèles.

4. Aube (7) selon la revendication 3, dans laquelle l'au moins une tige (34) est insérée dans une lumière (33) traversante débouchant sur une face radialement interne (241) de la partie de pied d'aube (24).

5. Aube (7) selon l'une des revendications 3 et 4, dans laquelle l'au moins une tige (34) est rectiligne.

6. Aube (7) selon l'une des revendications 1 et 2, dans laquelle le renfort structural (31) comprend un fût (36) monolithique avec la partie de pied d'aube (24) et s'étendant à travers un passage (37) formé dans la partie d'échasse (26) et le cas échéant le corps (27) de la partie de pale (25).

7. Aube (7) selon la revendication 6 prise en combinaison avec la revendication 2, dans laquelle la contreplaque (32) est raccordée à une extrémité du fût (36).

8. Aube (7) selon l'une des revendications 6 et 7, dans laquelle le passage (37) est évasé dans la partie d'échasse (26) du longeron (21) de sorte à ménager un espace annulaire (38) autour du fût (36) dans la partie d'échasse (26).

9. Aube (7) selon l'une des revendications 1 à 8, dans laquelle le longeron (21) est métallique.

10. Aube (7) selon l'une des revendications 1 à 9, comprenant en outre une pièce de remplissage (39) comportant des cavités internes, logée dans la structure à profil aérodynamique (20) entre les deux branches (28) de la partie de pale (25).

11. Soufflante (3) comprenant un moyeu (6) et des aubes (7) selon l'une des revendications 1 à 10 s'étendant radialement à partir du moyeu (6), chaque aube (7) étant montée rotative par rapport au moyeu autour d'un axe de calage (Y) respectif.

12. Moteur (1) à turbine à gaz comprenant une soufflante (3) selon la revendication 11 et un mécanisme d'actionnement (8) propre à être commandé pour faire tourner les aubes (7) autour d'axes de calage (Y) de manière à modifier un angle de calage des aubes (7).

13. Aéronef (100) comprenant au moins un moteur (1) à turbine à gaz selon la revendication 12.

14. Procédé de fabrication d'une aube (7) selon l'une des revendications 1 à 10 comprenant les étapes suivantes :
S1 : réalisation du longeron (21) et du renfort structural (31) ;
S3 : réalisation du renfort fibreux de la structure à profil aérodynamique (20), par exemple par tissage tridimensionnel ;
S4 : insertion du longeron (21) dans le renfort fibreux (23) de sorte que la partie de pied d'aube (24) se trouve à l'extérieur du premier renfort fibreux (23) et que la partie de pale (25) se trouve à l'intérieur du premier renfort fibreux (23) ; et
S5 : placement l'ensemble formé par le premier renfort fibreux (23) et le deuxième renfort fibreux (26) dans un moule et injection d'une matrice dans l'ensemble de sorte à obtenir l'aube (7).

15. Procédé selon la revendication 14, comprenant en outre, préalablement à l'étape S4, une étape de positionnement (S2) d'une pièce de remplissage réalisée dans un matériau comportant des cavités internes entre les branches (28) de la partie de pale (25) du longeron (21).

## Patentansprüche

1. Schaufel (7) einer Turbomaschine, umfassend:
- eine Struktur mit aerodynamischem Profil (20), die zwei einander gegenüberliegende Häute (22) umfasst, wobei die Häute (22) eine durch eine Matrix verdichtete Faserverstärkung (23) umfassen; und
- einen Holm (21) mit einem Schaufelfußteil (24), das so konfiguriert ist, dass es auf eine Nabe eines Rotors der Turbomaschine montiert werden kann, einem Blattteil (25), das im Innern der Struktur mit aerodynamischem Profil (20) zwischen den beiden Häuten (22) angeordnet ist, und einem Stelzenteil (26), das sich außerhalb der Struktur mit aerodynamischem Profil (20) zwischen dem Schaufelfußteil (24) und dem Blattteil (25) erstreckt,
wobei das Blattteil (25) einen mit dem Schaufelfußteil (24) verbundenen Körper (27) und zwei sich radial von dem Körper (27) aus erstreckende Schenkel umfasst;
wobei die Schaufel (7) **dadurch gekennzeichnet ist, dass** sie außerdem eine strukturelle Verstärkung (31) umfasst, die sich von dem Schaufelfußteil (24) bis zu dem Körper (27) des Blattteils (25) erstreckt, wobei die strukturelle Verstärkung (31) fest mit dem Schaufelfußteil (24) verbunden ist und so konfiguriert ist, dass sie im Falle eines Bruchs des Holms (21) innerhalb des Stelzenteils (26) einen von dem Stelzenteil (26) getrennten Kraftpfad bildet.

2. Schaufel (7) nach Anspruch 1, wobei die strukturelle Verstärkung (31) eine Gegenplatte (32) umfasst, die so an dem Blattteil (25) befestigt ist, dass sie mit dem Körper (27) gegenüber dem Schaufelfußteil (24) in Kontakt kommt.

3. Schaufel (7) nach Anspruch 2, wobei die strukturelle Verstärkung (31) mindestens eine zwischen dem Schaufelfußteil (24) und der Gegenplatte (32) eingepresste Stange (34), vorzugsweise zwei parallele Stangen (34), umfasst.

4. Schaufel (7) nach Anspruch 3, wobei die mindestens eine Stange (34) in eine durchgehende Öffnung (33) eingesetzt ist, die in eine radial innere Fläche (241) des Schaufelfußteils (24) mündet.

5. Schaufel (7) nach einem der Ansprüche 3 und 4, wobei die mindestens eine Stange (34) geradlinig ist.

6. Schaufel (7) nach einem der Ansprüche 1 und 2, wobei die strukturelle Verstärkung (31) einen Schaft (36) umfasst, der monolithisch mit dem Schaufelfußteil (24) ist und sich durch einen Durchgang (37) erstreckt, der in dem Stelzenteil (26) und gegebenenfalls dem Körper (27) des Blattteils (25) ausgebildet ist.

7. Schaufel (7) nach Anspruch 6 in Kombination mit Anspruch 2, wobei die Gegenplatte (32) mit einem Ende des Schaftes (36) verbunden ist.

8. Schaufel (7) nach einem der Ansprüche 6 und 7, wobei der Durchgang (37) in dem Stelzenteil (26) des Holms (21) derart aufgeweitet ist, dass ein ringförmiger Raum (38) um den Schaft (36) in dem Stelzenteil (26) geschaffen wird.

9. Schaufel (7) nach einem der Ansprüche 1 bis 8, wobei der Holm (21) aus Metall ist.

10. Schaufel (7) nach einem der Ansprüche 1 bis 9, die weiter ein Füllelement (39) mit inneren Hohlräumen umfasst, das in der Struktur mit aerodynamischem Profil (20) zwischen den beiden Schenkeln (28) des Blattteils (25) angeordnet ist.

11. Gebläse (3) mit einer Nabe (6) und sich radial von der Nabe (6) aus erstreckenden Schaufeln (7) nach einem der Ansprüche 1 bis 10, wobei jede Schaufel (7) relativ zu der Nabe drehbar um eine jeweilige Stellachse (Y) montiert ist.

12. Gasturbinentriebwerk (1) mit einem Gebläse (3) nach Anspruch 11 und einem Betätigungsmechanismus (8), der so gesteuert werden kann, dass sich die Schaufeln (7) so um Stellachsen (Y) drehen, dass ein Stellwinkel der Schaufeln (7) verändert wird.

13. Flugzeug (100) mit mindestens einem Gasturbinentriebwerk (1) nach Anspruch 12.

14. Verfahren zur Herstellung einer Schaufel (7) nach einem der Ansprüche 1 bis 10, umfassend die folgenden Schritte:
S1: Erstellen des Holms (21) und der strukturellen Verstärkung (31);
S3: Erstellen der Faserverstärkung der Struktur mit aerodynamischem Profil (20), beispielsweise durch dreidimensionales Weben;
S4: Einsetzen des Holms (21) in die Faserverstärkung (23), so dass sich das Schaufelfußteil (24) außerhalb der ersten Faserverstärkung (23) und das Blattteil (25) innerhalb der ersten Faserverstärkung (23) befindet; und
S5: Platzieren der aus der ersten Faserverstärkung (23) und der zweiten Faserverstärkung (26) gebildeten Anordnung in einer Form und Einspritzen einer Matrize in die Anordnung, um die Schaufel (7) zu erhalten.

15. Verfahren nach Anspruch 14, das ferner vor dem Schritt S4 einen Schritt des Positionierens (S2) eines Füllelements, das aus einem Material erstellt ist, das innere Hohlräume zwischen den Schenkeln (28) des Blattteils (25) des Holms (21) aufweist, umfasst.

## Claims

1. Turbomachine blade (7) comprising :
- an airfoil structure (20) comprising two opposite skins (22), the skins (22) comprising a fibrous reinforcement (23) densified by a matrix; and
- a spar (21) comprising a blade root portion (24) configured to be mounted on a hub of a rotor of the turbomachine, an airfoil portion (25) disposed inside the airfoil structure (20) between the two skins (22), and a stilt portion (26) extending outside the airfoil structure (20) between the blade root portion (24) and the airfoil portion (25),
the airfoil portion (25) comprising a body (27) connected to the blade root portion (24) and two legs extending radially from the body (27);
the blade (7) being **characterised in that** it further comprises a structural reinforcement (31) extending from the blade root portion (24) to the body (27) of the airfoil portion (25), the structural reinforcement (31) being integral with the blade root portion (24) and configured to form a force path distinct from the stilt portion (26) in the event of failure of the spar (21) within the stilt portion (26).

2. Blade (7) according to claim 1, wherein the structural reinforcement (31) comprises a counterplate (32) fixed to the blade portion (25) so as to come into contact with the body (27), opposite the blade root portion (24).

3. Blade (7) according to claim 2, wherein the structural reinforcement (31) comprises at least one rod (34) clamped between the blade root portion (24) and the counterplate (32), preferably two parallel rods (34).

4. Blade (7) according to claim 3, wherein the at least one rod (34) is inserted in a through slot (33) opening onto a radially inner face (241) of the blade root portion (24).

5. Blade (7) according to one of claims 3 and 4, wherein the at least one rod (34) is straight.

6. Blade (7) according to one of claims 1 and 2, wherein the structural reinforcement (31) comprises a shank (36) monolithic with the blade root portion (24) and extending through a passage (37) formed in the stilt portion (26) and optionally the body (27) of the airfoil portion (25).

7. Blade (7) according to claim 6 taken in combination with claim 2, wherein the counterplate (32) is connected to one end of the shank (36).

8. Blade (7) according to one of claims 6 and 7, wherein the passage (37) is flared in the stilt portion (26) of the spar (21) so as to provide an annular space (38) around the shank (36) in the stilt portion (26).

9. Blade (7) according to one of claims 1 to 8, wherein the spar (21) is metal.

10. Blade (7) according to one of claims 1 to 9, further comprising a filler (39) having internal cavities, housed in the airfoil structure (20) between the two legs (28) of the airfoil portion (25).

11. A fan (3) comprising a hub (6) and blades (7) according to one of claims 1 to 10 extending radially from the hub (6), each blade (7) being mounted so as to be rotatable relative to the hub about a respective pitch axis (Y).

12. A gas turbine engine (1) comprising a fan (3) as claimed in claim 11 and an actuating mechanism (8) operable to rotate blades (7) about pitch axes (Y) so as to change a pitch angle of the blades (7).

13. An aircraft (100) comprising at least one gas turbine engine (1) according to claim 12.

14. A method of manufacturing a blade (7) according to one of claims 1 to 10 comprising the following steps:
S1 : production of the spar (21) and the structural reinforcement (31);
S3 : production of the fibrous reinforcement of the aerodynamic profile structure (20), for example by three-dimensional weaving;
S4 : inserting the spar (21) into the fibre reinforcement (23) so that the blade root portion (24) is outside the first fibre reinforcement (23) and the airfoil portion (25) is inside the first fibre reinforcement (23); and
S5 : placing the assembly formed by the first fibrous reinforcement (23) and the second fibrous reinforcement (26) in a mould and injecting a matrix into the assembly so as to obtain the blade (7).

15. Method according to claim 14, further comprising, prior to step S4, a step of positioning (S2) a filler made of a material having internal cavities between the legs (28) of the airfoil portion (25) of the spar (21).
